# EUROPÄISCHE PATENTSCHRIFT

(11) **EP 1 175 959 B1**
(45) Veröffentlichungstag und Bekanntmachung des Hinweises auf die Patenterteilung: **06.10.2004**
(21) Anmeldenummer: 01117258.2
(22) Anmeldetag: 17.07.2001
(51) Int. Cl.: B23Q 11/00, B23Q 17/00, B23Q 1/00, B23Q 3/18

(54) **Schnellspanneinheit**
Quick clamping unit
Unité à serrer rapide

(30) Priorität: 28.07.2000 DE 10036885
(43) Veröffentlichungstag der Anmeldung: 30.01.2002
(73) Patentinhaber: Ludwig Ehrhardt GmbH, 35321 Laubach (DE)
(72) Erfinder: Kiefer, Roland, 73660 Urbach (DE)
(74) Vertreter: von Ahsen, Erwin-Detlef, Dipl.-Ing.

(56) Entgegenhaltungen:
- DE-A- 19 841 928
- DE-U- 29 722 730

## Beschreibung

Die Erfindung bezieht sich auf eine Schnellspanneinheit zum fixieren eines Schnellspannzapfens auf einer Aufspannplatte, wobei der Schnellspannzapfen in einen hydraulisch/mechanisch betätigten Kolben eingesetzt ist und der Raum zwischen Kolben und Schnellspannzapfen mittels Druckluft frei von eindringenden Partikeln gehalten wird.

Spannzapfen sind Bestandteile von Spanneinrichtungen, durch die zu bearbeitende Werkstücke bei jedem Arbeitsgang eine zuvor definierte Lage einnehmen. Solche Spanneinrichtungen sind Bestandteile von Aufspannplatten, die Teil von Maschinentischen, Vorrichtungen, Rasterplatten und Paletten sein können und mittels derer sich Werkstücke exakt definiert aufnehmen lassen. Die Spannzapfen werden dann in Schnellspanneinheiten fest gesetzt.

Es ist eine Spanneinrichtung zur Fixierung eines Einzugsnippels auf einer Aufspannplatte gemäss dem Oberbegriff des Anspruchs 1 bekannt (DE 198 41 928), die einen Kolben druckabhängig betätigt, der den Einzugsnippel aufnimmt. Die Einrichtung ist mit einer Druckluftquelle verbunden, so dass über einen Lufteinblaskanal die Druckluft den Raum unterhalb des Kolbens und durch einen Durchlasskanal dem Raum, in dem der Einzugsnippel eingezogen wird, zuführbar ist. Damit ist der Bereich des Einzugnippels ständig mit dem Druckluftkanal verbunden. Das Umspülen des Einzugsnippels ist jedoch nur dann zweckmäßig, wenn im entspannten Zustand der Einzugsnippel herausgenommen wird. Somit sind zusätzlichen Maßnahmen erforderlich um die Luftzufuhr zu regeln. Ferner ist der Raum unterhalb des Kolbens nach oben zum Bereich des Einzugsnippels offen, womit für Späne, Kühlmittel und andere Teilchen ein direkter Zugang zum Druckluftkanal besteht. Dies Partikel sind allein durch die Druckluft nicht immer aus dem Druckluftkanal entfernbar. Der jeweilige Zustand während des Spannvorganges ist nicht feststellbar, so dass sich Fehler, wie Tellerfederbruch usw. nicht ohne weiteres erkennen lassen.

Es ist somit Aufgabe der Erfindung einen Schnellspannzapfen in eine Schnellspanneinheit einzuführen und den Einzugsraum durch Drucklufteinblasung frei von Fremdkörpern zu halten und gleichzeitig Maßnahmen zu treffen, dass keine Verunreinigungen außerhalb des den Schnellspannzapfen unmittelbar umgebenden Raum stattfindet. Ferner den jeweiligen Spannzustand des Einfahrens zu erfassen, zu überwachen und anzuzeigen.

Die Lösung der Aufgabe ist den Merkmalen des Anspruchs 1 zu entnehmen.
In den Fig. Ist die Erfindung näher beschrieben.

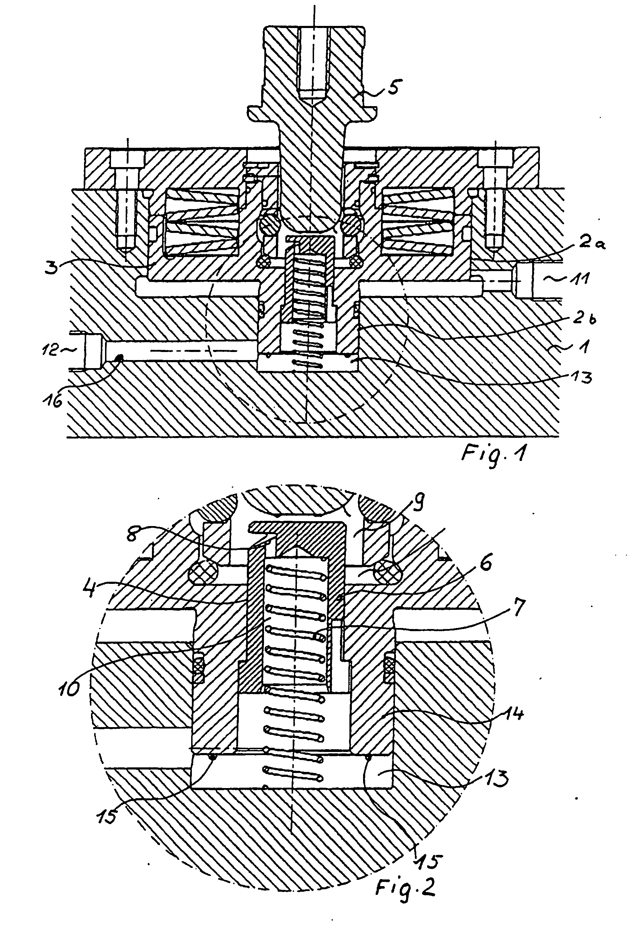

- Fig. 1: zeigt die entspannte Schnellspanneinheit im Schnitt
- Fig. 2: zeigt einen Ausschnitt davon

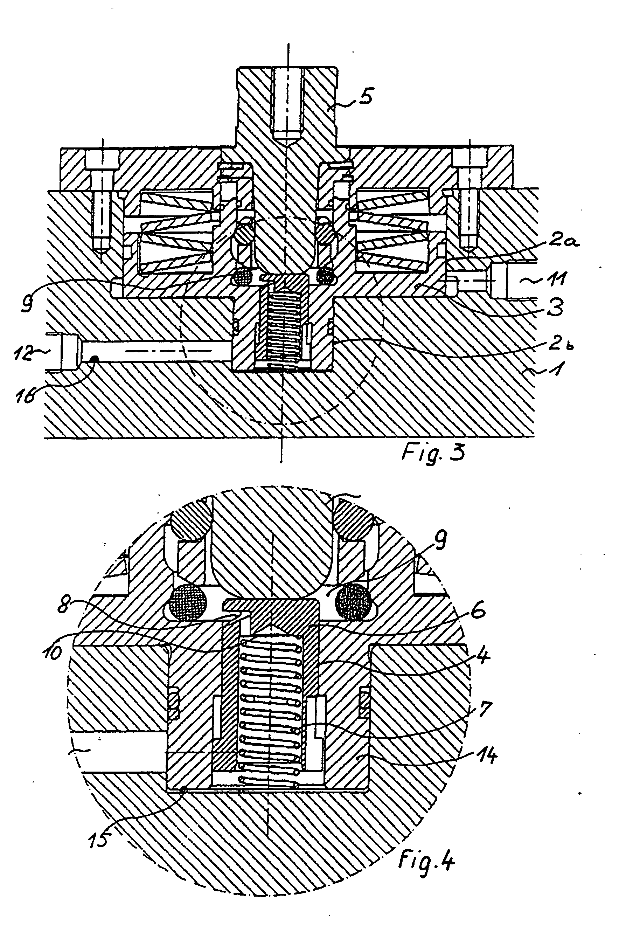

- Fig. 3: zeigt die gespannte Schnellspanneinheit im Schnitt
- Fig. 4: zeigt einen Ausschnitt davon

In einem Gehäuse 1 ist eine Bohrung 2a,b eingebracht, in die ein Kolben 3 gleitend eingefügt ist. Die Bohrung 2 weist zwei unterschiedliche Durchmesser a und b auf. Der Kolben 3 besitzt eine Durchgangsstufenbohrung 4, in die einmal der Schnellspannzapfen 5 und unmittelbar darunter eine Buchse 6 einfügbar sind. Die Buchse 6 ist mit einer Sackbohrung 10 versehen, in die eine Druckfeder 7 eingefügt ist. Die Buchse ist mit einem Kopf nach oben abgeschlossen. Sobald der Schnellspannzapfen 5 in den Kolben 3 eingefügt wird kommt es zu einer Berührung zwischen Schnellspannzapfen und dem Kopf der Buchse 6, so dass im Spannzustand die Buchse 6 gegen die Federkraft der Druckfeder 7 durch den im Kolben fixierten Schnellspannzapfen heruntergedrückt wird.

In den Kopf der Buchse 6 sind Wirbeldüsen 8 eingelassen derart, dass eine Verbindung zur Durchgangsbohrung 4 und zum Einzugsbereich 9 des Schnellspannzapfens 5 besteht. Es werden mehrere vorzugsweise drei Wirbeldüsen auf dem Umfang verteilt.

Der Kolben 3 kann sowohl mechanisch als auch hydraulisch betätigt werden. Die mechanische Ansteuerung erfolgt über Tellerfedern und die hydraulische Ansteuerung erfolgt über den Ölkanal 11. Im Gehäuse 1 ist ein Druckluftkanal 12 eingebracht, der in den Freiraum 13 unterhalb der Buchse 6 mündet. Dieser Druckluftkanal 12 ist durch den unteren Teil 14 des Kolbens 3 verschließbar. Damit wirkt Teil 14 wie ein Ventil. Diesem unteren Teil 14 ist ein Schalter 15 so zugeordnet, dass immer dann ein Signal abgeben wird, wenn Teil 14 auf den Boden des Freiraumes 13 aufsetzt. Dieses Signal steht nur dann an, wenn der Spannvorgang vollständig abgeschlossen und damit der Endzustand erreicht ist. Der Schalter 15 kann auch an anderen Stellen dem Kolben 3 zugeordnet werden und im Bedarfsfall auch extern angeordnet sein. Wichtig ist, dass der Schalter nur dann anspricht, wenn der Spannzustand vollständig erreicht ist. Schalter 15 kann ein induktiver Sensor sein oder ein beliebiges anderes Schaltelement.

Zusätzliche Sensoren 16, die dem Druckluftkanal 12 zugeordnet sind, geben die Möglichkeit den anstehenden Druck und oder die Strömung der Luft zu messen und damit weitere Daten zu erfassen, die ebenfalls den jeweiligen Zustand des Spannens erkennen lassen. Ist der Kolben 3 nicht ganz in seine Endstellung gleich aus welchen Gründen gefahren, so wird die Druckluft durch die Veränderung des Spaltes zwischen Teil 14 und dem Freiraum 13 unterschiedliche Werte aufweisen, die von den Sensoren 16 erfassbar sind. Die Sensoren 16 können auch außerhalb der Schnellspanneinheit dem Druckluftkanal zugeordnet werden. Ebenso ist es möglich Luftdruck und oder Luftströmung zentral für die Aufspannplatten zu erfassen.

Ist der Schnellspannzapfen 5 in den Kolben 3 eingesetzt, wird der Kolben 3 über Ölkanal 11 beaufschlagt und bewegt sich in das Gehäuse hinein. Dabei nimmt er den Schnellspannzapfen 5 mit, der seinerseits auf die Buchse 6 einwirkt und diese gegen die Federkraft der Feder 7 nach unten drückt. Während dieses Vorganges strömt Luft aus dem Druckluftkanal 12 in den Freiraum 13 und von hier zu den Wirbeldüsen 8, so dass der Schnellspannzapfen und der Raum in dem er sich befindet von dem Wirbelstrom erfasst werden, und zwar so lange, bis der Kolben 3 seine Endstellung erreicht hat und Teil 14 den Druckluftkanal vollständig abschließt.

Der Schalter 15 meldet den abgeschlossenen Vorgang. So lässt sich leicht erkennen, ob eine von mehreren Schnellspanneinheiten, die auf einer Aufspannplatte montiert sind, nicht ordnungsgemäß eingefahren ist.

Nach Bearbeitung des Werkstückes wird der Entspannvorgang eingeleitet und Kolben 3 beaufschlagt. Der Kolben fährt aus dem Gehäuse aus und nimmt den Schnellspannzapfen mit. Damit wird durch die Federkraft der Feder 7 die Buchse 6 nach oben gedrückt, gleichzeitig wird durch Teil 14 der Lufteinlass zum Kanal 12 geöffnet. Die Druckluft strömt wieder in die Bereiche ein und umspült den Einzugsbereich 9 des Schnellspannzapfens 5 und befreit diesen, während der Schnellspannzapfen 5 entfernt wird, von allen Spänen und Kühlmitteln. Durch den Kopf der Buchse 6 ist die Verbindung zwischen dem Einzugsbereich 9 des Schnellspannzapfens und dem Freiraum 13 abgedeckt, so dass zwar die Druckluft über die Wirbeldüsen 8 hindurchgeführt ist, Späne und andere Partikel jedoch daran gehindert sind in den Freiraum 13 zu gelangen.

Darüber hinaus wird Jede Störung, die durch einen der Schnellspannzapfen hervor gerufen wird, erfasst und lokalisiert. Dieses noch in doppelter Hinsicht, einmal durch den Schalter 15 und zum anderen durch die Sensoren 16.

## Patentansprüche

1. Schnellspanneinheit zum fixierten Spannen von Werkstücken auf Aufspannplatten, mittels eines Schnellspannzapfens, der in einem in dem Gehäuse der Spanneinheit geführten Kolben einfügbar ist und dass dem Gehäuse die zur Betätigung des Kolbens notwendigen Anschlüsse und ein Druckluftkanal zugeordnet sind und dass die Druckluft zum Ausblasen der Gehäusebohrung dient, wobei in dem Gehäuse (1) zwei ineinander übergehende Bohrungen (2a;2b) mit unterschiedlichen Durchmessern eingebracht sind, von denen die untere Bohrung als Sackbohrung ausgebildet ist, und in diesen Bohrungen (2a;2b) ein den Bohrdurchmessern angepasster abgestufter Kolben (3) geführt ist, ***dadurch gekennzeichnet,* dass** der Kolben (3) eine dreistufige Innenbohrung (4) aufweist, in deren oberem Teil Ein Spannzapfen (5) einfügbar ist, und in deren unterem Teil eine abgestufte Buchse (6) gleitend gelagert ist, deren eine Stufe den Hub begrenzt und die in ihrer Kopfplatte mit mehreren Wirbeldüsen (8) bestückt ist, wobei der untere Teil (14) des Kolbens (3) im Spannzustand den im Gehäuse (1) eingebrachten Druckluftkanal (12) an seiner Eintrittsöffnung in die Bohrung (2b) abschließt.

2. Schnellspanneinheit nach Anspruch 1, ***dadurch gekennzeichnet*, dass** in der Buchse (6) eine Druckfeder (7) wirksam ist, die sich am Boden des Gehäuses (1) und am Kopf der Buchse abstützt.

3. Schnellspanneinheit nach Anspruch 1, ***dadurch gekennzeichnet,* dass** durch die Wirbeldüsen (8) der für den Schnellspannzapfen (5) wirksame Einzugsbereich (9) im entspannten Zustand wirbelförmig mit Luft durchspült ist.

4. Schnellspanneinheit nach einem der Ansprüche 1-3, ***dadurch gekennzeichnet*, dass** ein Schalter (15) vorgesehen ist, der bei exakter Beendigung des Spannvorganges ein Signal abgibt.

5. Schnellspanneinheit nach einem der Ansprüche 1-3, ***dadurch gekennzeichnet,* dass** in dem Druckluftkanal (12) Sensoren (16) wirksam sind, die den Luftdruck und oder die Luftströmung im Druckluftkanal messen und davon abhängige Signale abgeben.

6. Schnellspanneinheit nach einem der Ansprüche 1-5, ***dadurch gekennzeichnet*, dass** der Spannzustand aller am Spannvorgang beteiligten Schnellspannzapfen durch die Schalter (15) und oder durch die Sensoren (16) zentral überwachbar ist.

## Claims

1. Quick-action clamping unit for fixed clamping of work pieces on clamping plates by means of a quick-action dog adapted to be inserted into a piston guided in the housing of the clamping unit, wherein ports required for operating said piston and a compressed-air passage are associated with said housing, and wherein the compressed air serves to blow out the housing bore, with two bores (2a; 2b) passing over into each other in said housing (1) and having different diameters being formed in said housing (1), whereof the lower bore is configured as blind bore, and with a stepped piston (3) adapted to the bore diameters being guided in said bores (2a; 2b), **characterised in that** said piston (3) presents a three-step inside bore (4) with an upper part in which a clamping dog (5) can be inserted, and a lower part in which a stepped sleeve (6) is supported for sliding movement, whose one step limits the stroke and which is equipped with several swirling nozzles (8) in their head plate, with the lower part (14) of said piston (3) closing said compressed-air passage (12) on its entry opening leading into said bore (2b) in the clamped condition, which passage is formed in said housing (1).

2. Quick-action clamping unit according to Claim 1, ***characterised in* that** a compression spring (7) is operative in said sleeve, which is supported on the bottom of said housing (1) and on the head of said sleeve.

3. Quick-action clamping unit according to Claim 1, ***characterised in* that** in the unclamped condition, the catchment area (9) operative for said clamping dog (5) is flushed by air in vortices by said swirling nozzles (8).

4. Quick-action clamping unit according to any of the Claims 1 to 3, ***characterised in* that** a switch (15) is provided that emits a signal upon precise termination of the clamping operation.

5. Quick-action clamping unit according to any of the Claims 1 to 3, ***characterised in* that** sensors (16) are operative in said compressed-air passage (12), which measure the air pressure and/or the airflow in said compressed-air passage and emit signals in dependence thereon.

6. Quick-action clamping unit according to any of the Claims 1 to 5, ***characterised in* that** the clamped condition of all clamping dogs involved in the clamping operation can be centrally monitored by said switch (15) and/or by said sensors (16).

## Revendications

1. Unité de serrage à action rapide à serrer et fixer des pièces à usiner sur des plaques de fixation moyennant un tenon de serrage à action rapide, qui est apte à être inséré dans un piston guidé dans le carter de l'unité de serrage, dans laquelle des raccords requis pour la commande dudit piston et un passage d'air comprimé sont affectés audit carter, et dans laquelle de l'air comprimé sert à souffler l'alésage du carter, à deux alésages (2a; 2b) passant l'un dans l'autre dans ledit carter (1) et aux diamètres différents étant formés dans ledit carter (1), dont l'alésage inférieure est configuré sous forme d'un trou borgne, et à un piston à gradins (3), qui est adapté aux diamètres des alésages, étant guidé dans lesdites alésages (2a; 2b), **caractérisée en ce que** ledit piston (3) présente un alésage intérieur (4) à trois gradins à une partie supérieure, dans laquelle un tenon de serrage (5) peut être inséré, et à une partie inférieure, dans laquelle une douille à gradins (6) est logée pour un mouvement glissant, dont un gradin limite la course et qui est équipé de plusieurs tuyères à turbulence (8) dans son plaque supérieure, à la partie inférieure (14) dudit piston (3) fermant ledit passage d'air comprimé (12) à son ouverture d'admission dans ledit alésage (2b) en état serré, ledit passage étant formé dans ledit carter (1).

2. Unité de serrage à action rapide selon la revendication 1, ***caractérisée en ce* qu'**un ressort de compression (7) est opératif dans ladite douille (6), qui s'appuie au fond dudit carter (1) et à la tête de ladite douille.

3. Unité de serrage à action rapide selon la revendication 1, ***caractérisée en ce* qu'**en état non serré, la zone d'attraction (9) opérative pour ledit tenon de serrage (5) à action rapide est rincée en tourbillons moyennant de l'air par lesdites tuyères à turbulence (8).

4. Unité de serrage à action rapide selon une quelconque des revendications 1 à 3, ***caractérisée en ce* qu'**un commutateur (15) est disposé, qui émet un signal au cas d'une terminaison exacte de l'opération de serrage.

5. Unité de serrage à action rapide selon une quelconque des revendications 1 à 3, ***caractérisée en ce* que** des détecteurs (16) sont opératifs dans ledit passage d'air comprimé, qui mesurent la pression d'air et/ou le courant d'air dans ledit passage d'air comprimé et émettent des signaux en dépendant.

6. Unité de serrage à action rapide selon une quelconque des revendications 1 à 5, ***caractérisée en* ce que** l'état serré de tous les tenons de serrage à action rapide, qui contribuent à l'opération de serrage, peut être surveillé centralement par ledit commutateur (15) ou par lesdits détecteurs (16).
